Europäisches Patentamt

European Patent Office

Office européen des brevets

(11) Veröffentlichungsnummer: **0 011 748**
**B1**

(12) **EUROPÄISCHE PATENTSCHRIFT**

(45) Veröffentlichungstag der Patentschrift:
01.12.82

(21) Anmeldenummer: 79104395.3

(22) Anmeldetag: 08.11.79

(51) Int. Cl.³: **C 08 J 9/06, C 08 L 23/02,**
**C 08 K 3/22, C 08 K 3/26**

(54) Verfahren zur Herstellung von Schaumstoffen aus Polyolefinen.

(30) Priorität: 02.12.78 DE 2852287

(43) Veröffentlichungstag der Anmeldung:
11.06.80 Patentblatt 80/12

(45) Bekanntmachung des Hinweises auf die Patenterteilung:
01.12.82 Patentblatt 82/48

(84) Benannte Vertragsstaaten:
AT BE CH DE FR GB IT NL

(56) Entgegenhaltungen:
DE-A-1 494 914
DE-A-2 359 007
DE-A-2 714 800
US-A-3 868 337

(73) Patentinhaber: **DYNAMIT NOBEL
AKTIENGESELLSCHAFT, Patentabteilung
Postfach 1209, D-5210 Troisdorf, Bez. Köln (DE)**

(72) Erfinder: **Kühnel, Werner,
D-5206 Neunkirchen-Schöneshof (DE)**
Erfinder: **Spielau, Paul, Dr., Van-Gogh-Platz 10,
D-521 Troisdorf-Eschmar (DE)**

ACTORUM AG

## Verfahren zur Herstellung von Schaumstoffen aus Polyolefinen

Gegenstand der Erfindung ist ein Verfahren zur Herstellung von Schaumstoffen aus Polyolefinen durch peroxidische Vernetzung und Verschäumen durch ein chemisches Schäummittel unter Normaldruckbedingungen in Gegenwart einer Magnesiumverbindung als Verschäumungshilfsmittel sowie ggf. weiterer Hilfsmittel.

Es ist bekannt, Polyolefine mit organischen Peroxiden und Schäummitteln zu versetzen. Das Vermischen der Polyolefine mit den Vernetzungs- und Schäummitteln sowie ggf. üblichen Zusatzstoffen kann auf einem Mischwalzwerk oder einem Extruder unter nachfolgender Herstellung der Formkörper, wie Platten oder kontinuierlicher Bahnen, unterhalb der Zersetzungstemperatur des Peroxids erfolgen. Anschliessend erfolgt die Vernetzung des Polyolefins unterhalb des Zersetzungspunktes des Schäummittels durch Zersetzen des Vernetzungsmittels. Danach wird die Temperatur bis zum Zersetzungsbereich des Schäummittels erhöht, so dass durch die dabei entstehenden Gase das Polyolefin geschäumt wird. Das bei diesen sogenannten «drucklosen» Schäumprozessen (Arbeiten unter Normaldruckbedingungen) bevorzugt verwendete Schäummittel ist das Azodicarbonamid. Hierbei entsteht ein Polyolefinschaum mit relativ hoher Dichte und ungleichmässiger Schaumstruktur. (US-PS 3 098 831, DE-AS 1 694 130).

Prinzipiell kann die Dichte des Schaumstoffs durch Variierung der Schäummittelmenge reguliert werden. Jedoch gelingt es dabei nicht, insbesondere bei niedrigen Dichten des Schaumstoffes, gleichzeitig auch einen Schaumstoff mit gleichmässiger Schaumstruktur und Oberfläche herzustellen.

Zur Erhöhung der Gasausbeute ist es aus der DE-PS 1 936 098 bekannt, dem Schäummittel Azodicarbonamid als Verschäumungshilfsmittel 0,05 bis 10 Gew.-% einer Chromverbindung zuzusetzen. Um eine merkliche erhöhte Gasausbeute und damit eine Reduzierung des Raumgewichts (Dichte, auch Rohdichte genannt) des Schaumstoffs zu erzielen, sind jedoch relativ grosse Mengen an Chromverbindung erforderlich, was sich in mehrerer Hinsicht als nachteilig erweist. Die Schaumstoffe werden farblich verändert, die Schaumstruktur ist unregelmässig und die Oberfläche ungleichmässig. Nachteilig ist ferner, dass bei Anwendung derart grosser Mengen an Chromverbindung aus Umweltschutzgründen erhebliche Investitionen erforderlich sind, die das Verfahren unrentabel gestalten.

Zur Herabsetzung des Zersetzungspunktes des Azodicarbonamids hat man auch schon sogenannte «Kicker» verwendet, z.B. Zink-, Cadmium-, Barium- oder Blei-Verbindungen und – wie aus DE-OS 2 351 515 hervorgeht – auch Magnesium-Verbindungen.

Bei der Herstellung peroxidisch vernetzter Schaumstoffe nach den «drucklosen» Schäumverfahren aus einem Polyolefin führt jedoch der Einsatz von Kickern zu Schwierigkeiten. Die verwendeten Substanzen stören die Funktion des Peroxids und damit die Vernetzung und in den meisten Fällen auch den folgenden Schaumprozess, wodurch Schaumstoffe mit unbefriedigend hoher Dichte entstehen. Bei der früher beginnenden Zersetzung des Schäummittels besteht die Gefahr, dass die Vernetzung noch nicht genügend weit fortgeschritten ist, sobald das Schäummittel in Aktion tritt, so dass Schaumstoffe mit vergrösserten Zellen entstehen.

Bei einem anderen Schäumprozess, bei dem Polyäthylen in einer geschlossenen Form unter Anwendung eines Pressdrucks von z.B. 80 bar zunächst auf die Zersetzungstemperatur des Azodicarbonamids erhitzt und einige Zeit bei dieser Temperatur belassen wird, bevor der eigentliche Schäumungsprozess unter Aufhebung des Überdrucks erfolgt, besteht das Problem der Zellvergrösserung durch «Kicker» nicht oder zumindest nicht in dem Masse wie bei den sogenannten «drucklosen» Schäumverfahren, da bekanntlich dann relativ feine Zellen entstehen, wenn die Thermoplastschmelze im Augenblick der Treibmittelspaltung mit dem aus der Zersetzung des Azodicarbonamid resultierenden Stickstoff gesättigt ist, was bei dem bekannten Verfahren durch Anwendung des Pressdrucks vor dem eigentlichen Schäumungsprozess erreicht wird (Vergl. JA-OS 40 577/77). Bei diesem Pressverfahren wird als Verschäumungshilfsmittel basisches Magnesiumcarbonat, Magnesiumhydroxid und Magnesiumoxid in einer Menge von mindestens 5 Gew.-% bis zu 100 Gew.-%, bezogen auf das eingesetzte Azodicarbonamid, angewendet. Nach den Beispielen werden 25 Gew.-% der Magnesiumverbindung benötigt, um eine 20fache Vergrösserung des zu verschäumenden Formkörpers zu bewirken. Ohne Verschäumungshilfsmittel wird eine 15fache Vergrösserung erreicht. Derartige unter Überdruck arbeitende Schäumprozesse sind daher mit solchen Schäumprozessen nicht vergleichbar, bei denen durchweg unter Normaldruckbedingungen gearbeitet wird. Sie können auch aus einem weiteren Grunde nicht in Analogie zu den «drucklosen» Schäumprozessen gesehen werden, da bei dem Überdruckschäumprozess nur das diskontinuierliche Herstellen von Formkörpern in Pressformen möglich ist, wohingegen bei den Verfahren, die durchweg unter Normaldruckbedingungen arbeiten, die Herstellung fortlaufender Schaumstoffbahnen bzw. -platten möglich ist (vgl. z.B. DE-AS 1 694 130).

Ausgehend von den bekannten Schäumprozessen, bei denen durchweg unter Normaldruckbedingungen gearbeitet wird, liegt der Erfindung die Aufgabe zugrunde, einen gleichmässigen Schaumstoff mit geringer Rohdichte zu schaffen.

Die Aufgabe wird erfindungsgemäss dadurch gelöst, dass als Magnesiumverbindung in einer Menge kleiner als 13 Gew.-%, bezogen auf die eingesetzte Schäummittelmenge, feinteiliges Magnesiumoxid und/oder Magnesiumhydroxid und/oder Magnesiumhydroxidcarbonat, vorzugsweise Magnesiumoxid (MgO) zugegeben werden.

Bei der Durchführung des erfindungsgemässen Verfahrens kann man so vorgehen, dass das Verfahren der Polyolefine mit den Vernetzungsmitteln, Schäummitteln, gegebenenfalls üblichen Zusatzstoffen sowie den erfindungsgemäss verwendeten Verschäumungshilfsmitteln auf einem Mischwalzwerk oder auf einem Extruder unter nachfolgender Herstellung der Formkörper, wie Platten oder kontinuierlicher Bahnen, bei Temperaturen unterhalb des Zersetzungspunktes des Peroxids erfolgt. Die mittlere Verweilzeit in der Mischvorrichtung ist so bemessen, dass eine Vernetzung der zu verschäumenden Mischung in diesem Stadium im wesentlichen unterbleibt. Anschliessend erfolgt die Vernetzung des Polyolefins unterhalb des Zersetzungspunktes des Schäummittels durch Zersetzung des Vernetzungsmittels unter Erhöhung der Schmelzviskosität des Polyolefins. Bei weiterer Temperaturerhöhung bei oder oberhalb der Zersetzungstemperatur des Schäummittels verschäumt der Formkörper. Je nach Menge des Schäummittels, des Verschäumungshilfsmittels, des Vernetzungsmittels und der Verfahrensbedingungen entsteht ein Schaum mit einer Rohdichte von 15 kg/m³ bis 300 kg/m³, vorzugsweise 20 bis 200 kg/m³. Das erfindungsgemässe Verfahren lässt sich mit besonderem Vorteil zur Herstellung fortlaufender Schaumstoffbahnen anwenden, beispielsweise nach dem in der DE-AS 1 694 130 beschriebenen Verfahren, bei dem unter Normaldruckbedingungen gearbeitet wird.

Als Schäummittel wird zweckmässig ein in der Hitze gasabspaltendes Mittel verwendet, dessen Zersetzungstemperatur höher liegt als diejenige des verwendeten organischen Peroxids. Geeignete Schäummittel sind z.B. Azodicarbonamid und/oder p,p'-oxi-bis-benzol-sulfonylhydrazid und/oder Dinitrosopentamthylentetramin u.dgl.

Bevorzugte Schäummittel in Verbindung mit dem erfindungsgemässen Verschäumungshilfsmittel sind solche mit einem Zersetzungspunkt bzw. Zersetzungsbereich ab etwa 190°C. Besonders bevorzugt wird Azodicarbonamid. Die anzuwendende Menge an Schäummittel richtet sich nach der angestrebten Rohdichte des herzustellenden Schaumstoffs und liegt im allgemeinen zwischen 0,5 bis 25 Gew.-%, vorzugsweise bei 1 bis 20 Gew.-%, bezogen auf die zu einem Formkörper zu verformende Gesamtmischung.

Die erfindungsgemäss als Verschäumungshilfsmittel eingesetzte Magnesiumverbindung bzw. -verbindungen werden im allgemeinen in einer Menge von kleiner als 13 Gew.-%, bezogen auf eingesetztes Schäummittel, verwendet. Die Magnesiumverbindungen wirken überraschenderweise als die Schaumstoffdichte reduzierende Mittel, denn – ausgehend von einer im wesentlichen durch die Schäummittelmenge vorgegebenen Rohdichte – gelingt es bei Zusatz der erfindungsgemässen Verschäumungshilfsmittel zu der zu verschäumenden Mischung eine Reduzierung der durch die angesetzte Menge an Schäummittel vorgegebenen Rohdichte von z.B. bis zu 2%, ggf. auch mehr als 20%, zu erreichen.

Durch die erfindungsgemäss verwendeten Verschäumungshilfsmittel wird offenbar die Gasausbeute des Schäummittels erhöht, so dass es prinzipiell möglich ist, die jeweils gewünschte Rohdichte des Schaumstoffs unter Anwendung geringerer Mengen an Schäummittel einzustellen.

Es hat sich überraschenderweise gezeigt, dass bei Anwendung von mehr als 13 Gew.-% der Magnesiumverbindungen, bezogen auf die eingesetzte Schäummittelmenge, die Rohdichte nicht nur nicht erniedrigt, sondern sogar erhöht wird (vergl. Vergleichsbeispiel 4). Die besten Ergebnisse bei der Erzielung einer erniedrigten Rohdichte erhält man bei Anwendung der Magnesiumverbindung bzw. -verbindungen in einer Menge von kleiner als 5 Gew.-%, vorzugsweise kleiner als 3,5 Gew.-%, insbesondere im Bereich von 0,5 bis 3,3 Gew.-%, wobei das Optimum etwa bei 2 Gew.-% liegt.

Als organisches Peroxid können je nach Polyolefinzusammensetzung 2,5-Dimethyl-2,5-di-(tert.-butylperoxy)-hexan, tert.-Butylhydroperoxid, Cumyl-tert.-butylperoxid, Di-tert.-butylperoxid, vorzugsweise Dicumylperoxid verwendet werden. Die Peroxide werden in Mengen von 0,3 bis 1,5 Gew.-% eingesetzt.

Als Polyolefine können Polyäthylen oder Polypropylen, ggf. auch deren Gemische, eingesetzt werden, vorzugsweise Polyäthylen, und zwar Niederdruck-Polyäthylen der Dichte 0,94 bis 0,97 g/m³ und/oder Hochdruck-Polyäthylen der Dichte 0,91 bis etwa 0,94 g/cm³, vorzugsweise Hochdruck-Polyäthylen. Unter der Bezeichnung «Polyolefine» werden aber auch verstanden: Mischpolymere, vorzugsweise solche, zu deren Herstellung Monomergemische mit überwiegendem Anteil an Äthylen verwendet wurden sowie deren Gemische mit Homopolymeren. Solche Mischpolymere sind z.B. Äthylen-Butylen-Mischpolymere, Mischpolymere aus Äthylen und Vinylacetat und dessen Derivaten, Mischpolymere aus Äthylen und Acrylsäureestern oder deren Derivaten, Mischpolymere aus Äthylen und Methacrylsäure oder deren Derivaten od.dgl. Auch Mischungen der obengenannten Polyolefine mit Kautschuken und/oder Kunststoffen können gemäss der Erfindung zu Schaumstoffen verarbeitet werden. Darunter werden z.B. Mischungen verstanden, die zu 50 Gew.-% und mehr aus Polyäthylen und/oder Polypropylen bestehen. Mit den genannten Polyolefinen mischbare Kautschuke sind z.B. Naturkautschuk, Äthylen-Propylen-Kautschuk, Butylkautschuk, Polyisobutylen, ABS-Kautschuk, Polybutadien, Polybuten und Polyisopren. Mit den genannten Polyolefinen mischbare Kunststoffe sind u.B. Polystyrol, chloriertes Polyäthylen, sulfochloriertes Polyäthylen od.dgl. Als übliche Zusatzstoffe, die gewöhnlich zusammen mit Kunststoffen auf Polyolefinbasis verwendet werden, sind z.B. Lichtschutzmittel, Pigmente, Füllstoffe, flammhemmende Mittel, antistatische Mittel, Gleitmittel od.dgl. zu nennen, die dem zu vernetzenden und zu verschäumenden Gemisch vor der Verarbeitung zu einem Formkörper zugesetzt werden können.

Bei der bevorzugten Anwendung des erfindungsgemässen Verschäumungshilfsmittels in Kombination mit Azodicarbonamid erfolgt die Vernetzung ab etwa 160 °C und die Verschäumung bei Temperaturen ab etwa 190 °C bis etwa 250 °C, bevorzugt bis etwa 220 °C. Bevorzugtes Verschäumungshilfsmittel ist MgO.

Im Sinne der Erfindung besonders gut geeignetes MgO ist kaustisches MgO mit MgO-Gehalten grösser als 84%, vorzugsweise grösser als 88 Gew.-%.

Kaustische MgO-Typen sind bekanntlich solche, die beim Glühen einen Gewichtsverlust aufweisen (die Bestimmung des Glühverlustes wird im allgemeinen bei etwa 1000 °C vorgenommen). Die Schüttgewichte der kaustischen MgO-Sorten bewegen sich im allgemeinen im Bereich von 50 bis 80 g/l, vorzugsweise kleiner als 500 g/l. Kaustisches MgO ist z.B. Magnesia usta, die auf chemischem Wege, beispielsweise aus Rohmagnesit durch Ausfällen des Carbonats und anschliessendes Glühen (Glühtemperatur kleiner als 1000 °C) hergestellt wird. Kaustisches MgO kann aber auch auf anderem Wege, z.B. durch direktes Brennen von Magnesit, hergestellt werden.

Bei der Bestimmung der Glühverluste der bevorzugt eingesetzten kaustischen MgO-Sorten findet man im allgemeinen Werte von ca. 1 bis kleiner als 10 Gew.-%, vorzugsweise 2 bis 6 Gew.-%.

Als Magnesiumhydroxide werden erfindungsgemäss bevorzugt reine Magnesiumhydroxide verwendet, wie sie z.B. für pharmazeutische Zwecke im Handel angeboten werden. Die Schüttgewichte liegen im allgemeinen unter 800 g/l, vorzugsweise im Bereich von 500 bis 650 g/l.

Als Magnesiumhydroxicarbonate (basisches Carbonat wechselnder Zusammensetzung) eignen sich z.B. solche mit MgO-Gehalten von 40 bis 45 Gew.-%. Die Schüttgewichte der im Handel erhältlichen Magnesiumhydroxidcarbonate liegen im allgemeinen unter 300 g/l.

Die Magnesiumverbindungen können einzeln oder im Gemisch als solche, ggf. in Abmischung mit dem Schäummittel der zu verschäumenden Mischung zugesetzt werden, ggf. aber auch in Form eines Konzentrats in einem Polyolefin.

Die erfindungsgemäss hergestellten Schaumstoffe können als Isoliermaterial in der Baubranche mit verbesserter Wärmeisolierung infolge der niedrigen Rohdichte, in der Verpackungsindustrie und vielfältig als Auskleidung von Böden, Decken und Wänden eingesetzt werden, wobei ebenfalls die niedrige Rohdichte in Verbindung mit der gleichmässigen Schaumstruktur von Vorteil ist.

Die folgenden Beispiele dienen der weiteren Erläuterung der Erfindung.

Der Schmelzindex wurde nach DIN 53735 (190 °C/2,15 kg) gemessen. Das eingesetzte Hochdruck-Polyäthylen hatte einen Schmelzindex von 4 g/10 Min. und eine Dichte von 0,92 g/cm.

Das eingesetzte Copolymere aus Äthylen/Vinylacetat (Gew.-Verhältnis 92:8) hatte einen Schmelzindex von 5 g/10 Min.

Das in den Beispielen 1, 2, 3, 4, 5, 6 sowie Vergleichsbeispiel 4 eingesetzte Magnesiumoxid hatte folgende chemisch-analytische Zusammensetzung:

| | |
|---|---|
| MgO | mindestens 95 Gew.-% |
| Glühverlust (1000 °C) | max. 5 Gew.-% |
| Ca-Gehalt | max. 2 Gew.-% |
| Fe-Gehalt | max. 0,1 Gew.-% |
| SO$_4$-Gehalt | max. 0,75 Gew.-% |
| Cl-Gehalt | max. 0,15 Gew.-% |
| Schüttgewicht 160 g/l | |

Das im Beispiel 7 eingesetzte Magnesiumhydroxidcarbonat hatte folgende chemisch-analytische Zusammensetzung:

| | |
|---|---|
| MgO-Gehalt | 41 Gew.-% |
| Ca-Gehalt | 1 Gew.-% |
| Fe-Gehalt | 0,02 Gew.-% |
| Schwermetalle (als Pb) | 0,004 Gew.-% |
| Cl-Gehalt | 0,02 Gew.-% |
| So$_4$-Gehalt | 0,5 Gew.-% |
| Schüttgewicht 130 g/l | |

Das im Beispiel 8 eingesetzte Magnesiumhydroxid hatte folgende chemisch-analytische Zusammensetzung:

| | | |
|---|---|---|
| Mg(OH)$_2$-Gehalt | grösser | 95 Gew.-% |
| Cl-Gehalt | kleiner | 0,05 Gew.-% |
| So$_4$-Gehalt | kleiner | 0,1 Gew.-% |
| Schwermetalle (als Pb) | kleiner | 0,002 Gew.-% |
| Fe-Gehalt | kleiner | 0,04 Gew.-% |
| As-Gehalt | kleiner | 0,0002 Gew.-% |
| Ca-Gehalt | kleiner | 0,5 Gew.-% |
| in Wasser lösliche Anteile | kleiner | 1 Gew.-% |
| Glühverlust (800°C) | | 31 Gew.-% |
| Schüttgewicht 650 g/l | | |

Vergleichsbeispiel 1

84 Gew.-Teile Hochdruck-Polyäthylen
1 Gew.-Teil Dicumylperoxid
15 Gew.-Teile Azodicarbonamid

werden auf einem Walzwerk bei 110 °C Walzenoberflächentemperatur und 20 Min. Walzzeit compoundiert, dann das Material als Walzfell abgezogen und in einer Presse bei 130 °C und 8 Min. Stehzeit zu einer 4 mm dicken Platte mit glatter Oberfläche abgepresst. Aus der Platte werden Proben von 8 cm Durchmesser ausgestanzt, die in einem Trockenschrank bei 210 °C zu Schaumkörpern der Dicke 13,5 mm und der Rohdichte 31 kg/m$^3$ ausgeschäumt werden. Die Rohdichte des Schaums ist durch die Rezeptur vorgegeben.

Beispiel 1

84 Gew.-Teile Hochdruck-Polyäthylen (wie Vergleichsbeispiel 1)
1 Gew.-Teil Dicumylperoxid
15 Gew.-Teile Azodicarbonamid
0,3 Gew.-Teile Magnesiumoxid (entsprechend 2 Gew.-%, bezogen auf Azodicarbonamid).

Die Verarbeitung und die Verarbeitungsbedingungen sind die gleichen wie bei Vergleichsbeispiel 1. Es wird ein Schaum von der Dicke 16 mm und der Rohdichte von 25 kg/m³ erhalten.

Vergleichsbeispiel 2
84 Gew.-Teile Hochdruck-Polyäthylen (wie Vergleichsbeispiel 1)
1 Gew.-Teil Dicumylperoxid
15 Gew.-Teile Azodicarbonamid
2 Gew.-Teile Blaupigmentkonzentrat (im Handel unter der Bezeichnung SICOVER-SAL® blau 23075 erhältlich).

Die Verarbeitung und die Verarbeitungsbedingungen sind die gleichen wie bei Vergleichsbeispiel 1. Es wird ein Schaum von der Dicke 12 mm und der Rohdichte von 36 kg/m³ erhalten.

Beispiel 2
84 Gew.-Teile Hochdruck-Polyäthylen (wie Vergleichsbeispiel 1)
1 Gew.-Teil Dicumylperoxid
15 Gew.-Teile Azodicarbonamid
2 Gew.-Teile Blaupigmentkonzentrat (wie Vergleichsbeispiel 2)
0,3 Gew.-Teile Magnesiumoxid (entspricht 2 Gew.-% MgO, bezogen auf Azodicarbonamid)

Die Verarbeitung und die Verarbeitungsbedingungen entsprechen denen des Vergleichsbeispiels 1. Es wird ein Schaum von der Dicke 14 mm und der Rohdichte 29 kg/m³ erhalten.

Beispiel 3
84 Gew.-Teile Hochdruck-Polyäthylen
1 Gew.-Teil Dicumylperoxid
15 Gew.-Teile Azodicarbonamid
0,1 Gew.-Teile MgO (entspricht ca. 0,7 Gew.-% MgO, bezogen auf Azodicarbonamid)

Die Verarbeitung und die Verarbeitungsbedingungen sind die gleichen wie bei Vergleichsbeispiel 1. Es wird ein Schaum von der Dicke 14,5 mm und der Rohdichte 27 kg/m³ erhalten.

Vergleichsbeispiel 3
84 Gew.-Teile Hochdruck-Polyäthylen (wie Vergleichsbeispiel 1)
1 Gew.-Teil Dicumylperoxid
15 Gew.-Teile Azodicarbonamid
2 Gew.-Teile MgO (entspricht 13 Gew.-%, bezogen auf Azodicarbonamid)

Die Verarbeitung und die Verarbeitungsbedingungen wie in Vergleichsbeispiel 1. Es wird ein Schaum von der Dicke 17 mm und der Rohdichte 31 kg/m³ erhalten.

Vergleichsbeispiel 4
84 Gew.-Teile Hochdruck-Polyäthylen (wie Vergleichsbeispiel 1)
1 Gew.-Teil Dicumylperoxid
15 Gew.-Teile Azodicarbonamid
3 Gew.-Teile MgO (entspricht 20 Gew.-% MgO, bezogen auf Azodicarbonamid)

Die Verarbeitung und die Verarbeitungsbedingungen sind die gleichen wie bei Vergleichsbeispiel 1. Es wird ein Schaum von der Dicke 15 mm und der Rohdichte 35 kg/m³ erhalten.

Beispiel 4
84 Gew.-Teile Hochdruck-Polyäthylen (wie Vergleichsbeispiel 1)
1 Gew.-Teil Dicumylperoxid
15 Gew.-Teile Azodicarbonamid
0,5 Gew.-Teile Magnesiumoxid (entsprechend 3,3 Gew.-%, bezogen auf Azodicarbonamid)

Die Verarbeitung und die Verarbeitungsbedingungen sind die gleichen wie bei Vergleichsbeispiel 1. Es wird ein Schaum der Dicke 16 mm und der Rohdichte 25 kg/³ erhalten. Keine weitere Rohdichteerniedrigung gegenüber Beispiel 1.

Vergleichsbeispiel 5
78,8 Gew.-Teile Copolymeres aus Äthylen-Vinylacetat
0,7 Gew.-Teile Dicumylperoxid
20,5 Gew.-Teile Azodicarbonamid

Die Verarbeitung und die Verarbeitungsbedingungen sind die gleichen wie bei Vergleichsbeispiel 1. Es wird ein Schaum der Dicke 15,5 mm und der Rohdichte 25 kg/m³ erhalten.

Beispiel 5
78,8 Gew.-Teile Copolymeres aus Äthylen-Vinylacetat
0,7 Gew.-Teile Dicumylperoxid
20,5 Gew.-Teile Azodicarbonamid
0,4 Gew.-Teile Magnesiumoxid (entsprechend ca. 2 Gew.-%, bezogen auf Azodicarbonamid)

Die Verarbeitung und die Verarbeitungsbedingungen sind die gleichen wie bei Vergleichsbeispiel 1. Es wird ein Schaum der Dicke 16,5 mm und der Rohdichte 20 kg/m³ erhalten.

Vergleichsbeispiel 6
88,9 Gew.-Teile Hochdruck-Polyäthylen
1,1 Gew.-Teile Dicumylperoxid
10,0 Gew.-Teile Azodicarbonamid

Die Verarbeitung und die Verarbeitungsbedingungen sind die gleichen wie bei Vergleichsbeispiel 1. Es wird ein Schaum der Dicke 13 mm und der Rohdichte 48 kg/m³ erhalten.

Beispiel 6
88,9 Gew.-Teile Hochdruck-Polyäthylen
1,1 Gew.-Teile Dicumylperoxid
10,0 Gew.-Teile Azodicarbonamid
0,3 Gew.-Teile Magnesiumoxid (entsprechend 3 Gew.-%, bezogen auf Azodicarbonamid)

Die Verarbeitung und die Verarbeitungsbedingungen sind die gleichen wie bei Vergleichsbeispiel 1. Es wird ein Schaum der Dicke 14 mm und der Rohdichte 40 kg/m³ erhalten.

Beispiel 7

| | | |
|---|---|---|
| 84 | Gew.-Teile | Hochdruck-Polyäthylen |
| 1 | Gew.-Teil | Dicumylperoxid |
| 15 | Gew.-Teile | Azodicarbonamid |
| 0,3 | Gew.-Teile | Magnesiumhydroxidcarbonat (entsprechend 2 Gew.-%, bezogen auf Azodicarbonamid) |

Die Verarbeitung und die Verarbeitungsbedingungen sind die gleichen wie bei Vergleichsbeispiel 1. Es wird ein Schaum der Dicke 13,5 mm und der Rohdichte 27 kg/m³ erreicht.

Beispiel 8

| | | |
|---|---|---|
| 84 | Gew.-Teile | Hochdruck-Polyäthylen |
| 1 | Gew.-Teil | Dicumylperoxid |
| 15 | Gew.-Teile | Azodicarbonamid |
| 0,3 | Gew.-Teile | Magnesiumhydroxid (entsprechend 2 Gew.-%, bezogen auf Azodicarbonamid) |

Die Verarbeitung und die Verarbeitungsbedingungen sind die gleichen wie bei Vergleichsbeispiel 1. Es wird ein Schaum der Dicke 13,5 mm und der Rohdichte 28 kg/m³ erreicht.

## Patentansprüche

1. Verfahren zur Herstellung von Schaumstoffen aus Polyolefinen durch peroxidische Vernetzung und Verschäumen durch ein chemisches Schäummittel unter Normaldruckbedingungen in Gegenwart einer Magnesiumverbindung als Verschäumungshilfsmittel sowie gegebenenfalls weiterer Hilfsmittel, dadurch gekennzeichnet, dass als Magnesiumverbindung in einer Menge kleiner als 13 Gew.-%, bezogen auf die eingesetzte Schäummittelmenge, feinteiliges MgO und/oder Magnesiumhydroxid und/oder Magnesiumhydroxidcarbonat, vorzugsweise MgO zugegeben werden.

2. Verfahren nach Anspruch 1, dadurch gekennzeichnet, dass die Magnesiumverbindung in der zu verschäumenden Mischung in einer Menge von kleiner als 5 Gew.-%, vorzugsweise kleiner als 3,5 Gew.-%, insbesondere 0,5 bis 3,3 Gew.-%, bezogen auf die eingesetzte Schäummittelmenge, enthalten ist.

3. Verfahren nach einem der Ansprüche 1 oder 2, dadurch gekennzeichnet, dass als MgO ein kaustisches MgO eingesetzt wird mit MgO-Gehalten grösser als 84 Gew.-%, vorzugsweise grösser als 88 Gew.-%.

4. Verfahren nach einem der Ansprüche 1 bis 3, dadurch gekennzeichnet, dass als Schäummittel solche mit einem Zersetzungspunkt bzw. Zersetzungsbereich ab etwa 190 °C, vorzugsweise Azodicarbonamid, eingesetzt werden.

## Claims

1. Process for the production of polyolefin foam materials by peroxidic cross-linking and foaming by means of a chemical foaming agent under normal pressure conditions in the presence of a magnesium compound as foaming auxiliary agent as well as optionally further auxiliary agents, characterised in that finely divided MgO and/or magnesium hydroxide and/or magnesium hydroxycarbonate, preferably MgO are added as a magnesium compound in an amount smaller than 13% by weight related to the amount of foaming agent employed.

2. Process according to claim 1, characterised in that the magnesium compound is contained in the mixture to be foamed in an amount of less than 5% by weight, preferably less than 3.5% by weight, especially 0.5 to 3.3% by weight related to the amount of foaming agent employed.

3. Process according to claim 1 or 2, characterised in that a caustic MgO with MgO content greater than 84% by weight, preferably greater than 88% by weight, is employed as MgO.

4. Process according to one of claims 1 to 3, characterised in that there is employed as foaming agent one with a decomposition point or decomposition range from about 190 °C, preferably azodicarbonamide.

## Revendications

1. Procédé pour la préparation de mousses à partir de polyoléfines par réticulation peroxydique et expansion à l'aide d'un agent d'expansion chimique, dans des conditions de pression normale, en présence d'un composé de magnésium comme adjuvant d'expansion, ainsi qu'éventuellement d'autres adjuvants, caractérisé en ce que l'on ajoute comme composé de magnésium, en une quantité inférieure à 13% en poids par rapport à la quantité d'agent d'expansion mise en œuvre, du MgO finement divisé et/ou de l'hydroxyde de magnésium et/ou de l'hydroxycarbonate de magnésium, de préférence MgO.

2. Procédé selon la revendication 1, caractérisé en ce que le composé de magnésium est contenu dans le mélange à expanser en une quantité inférieure à 5% en poids, de préférence inférieure à 3,5% en poids, en particulier de 0,5 à 3,3% en poids, par rapport à la quantité d'agent d'expansion mis en œuvre.

3. Procédé selon l'une des revendications 1 ou 2, caractérisé en ce que l'on met en œuvre comme MgO un oxyde de MgO caustique avec des teneurs en MgO supérieures à 84% en poids, de préférence supérieures à 88% en poids.

4. Procédé selon l'une quelconque des revendications 1 à 3, caractérisé en ce que l'on utilise comme agents d'expansion ceux ayant un point de décomposition ou un intervalle de décomposition se situant à partir d'environ 190 °C, et de préférence l'azodicarbonamide.